(19) Europäisches Patentamt
European Patent Office
Office européen des brevets

(11) **EP 1 722 908 B1**

(12) **FASCICULE DE BREVET EUROPEEN**

(45) Date de publication et mention
de la délivrance du brevet:
**07.07.2010 Bulletin 2010/27**

(21) Numéro de dépôt: **05717640.6**

(22) Date de dépôt: **17.02.2005**

(51) Int Cl.:
***B32B 15/08*** *(2006.01)*

(86) Numéro de dépôt international:
**PCT/FR2005/000372**

(87) Numéro de publication internationale:
**WO 2005/089974 (29.09.2005 Gazette 2005/39)**

(54) **PROCEDE DE FABRICATION D'UNE PIECE COMPOSITE**

VERFAHREN ZUR HERSTELLUNG EINES VERBUNDTEILS

METHOD FOR PRODUCING A COMPOSITE PART

(84) Etats contractants désignés:
**AT BE BG CH CY CZ DE DK EE ES FI FR GB GR HU IE IS IT LI LT LU MC NL PL PT RO SE SI SK TR**

(30) Priorité: **19.02.2004 FR 0401688**

(43) Date de publication de la demande:
**22.11.2006 Bulletin 2006/47**

(73) Titulaire: **ArcelorMittal France**
**93200 Saint-Denis (FR)**

(72) Inventeur: **PINARD, Fabrice**
**F-75011 Paris (FR)**

(74) Mandataire: **Plaisant, Sophie Marie et al**
**ARCELOR France**
**Arcelor Research Intellectual Property**
**5 Rue Luigi Cherubini**
**93212 La Plaine Saint-Denis Cedex (FR)**

(56) Documents cités:
**EP-A- 0 648 600     EP-A- 1 316 414**
**EP-A- 1 342 650     US-A- 5 882 784**

• **PATENT ABSTRACTS OF JAPAN vol. 0185, no. 85 (M-1700), 9 novembre 1994 (1994-11-09) & JP 06 218875 A (TORAY IND INC), 9 août 1994 (1994-08-09)**

**Description**

La présente invention concerne un procédé de fabrication d'une pièce composite stratifiée, les pièces obtenues selon ce procédé, et l'utilisation de ces pièces dans le domaine automobile pour fabriquer les caisses en blanc des véhicules, dans les domaines de l'électroménager, de l'industrie générale ou encore du bâtiment.

Les nouvelles législations mises en place en vue de réduire les émissions de gaz carboniques, obligent les constructeurs à réduire le poids des véhicules automobiles pour diminuer leur consommation de carburant.

Malgré les progrès réalisés par les sidérurgistes pour mettre au point des nuances d'acier présentant à la fois une bonne résistance et une bonne ductilité, ce qui permet de réduire sensiblement l'épaisseur des tôles, celles-ci présentent toujours des épaisseurs supérieures à 0,65 mm pour les pièces de grandes dimensions, c'est à dire des pièces pour lesquelles la tôle ou le flan de tôle utilisé pour les réaliser a au moins une de ses dimensions supérieure à 600 mm. Par conséquent, le poids de ce type de pièces demeure toujours supérieur aux exigences des constructeurs. En effet, la fabrication de pièces de peau, c'est à dire de pièces visibles comme par exemple les ailes, par mise en forme par emboutissage d'une tôle d'acier ayant une épaisseur inférieure à 0,65 mm n'est pas envisageable car très difficile à maîtriser sur une installation industrielle, notamment en raison des risques de formation de plis ou de déchirures sur la pièce emboutie.

Lors de l'emboutissage, la tôle d'acier est maintenue par des serres-flan entre une matrice et un poinçon présentant des formes souvent complexes. Ainsi, certaines zones de la tôle subissent des étirements, alors que d'autres zones au contraire, subissent des compressions.

Classiquement, lorsque la tôle a une épaisseur supérieure à 0,65 mm, on règle les outils d'emboutissage de manière à ce que la distance entre le poinçon et la matrice, que l'homme de l'art nomme classiquement « passage matière », soit égale ou supérieure à l'épaisseur de la tôle à emboutir. On travaille dans ces conditions, avec un jeu entre outils positif. L'usage est de prendre une marge équivalente à quelques pour-cents de l'épaisseur de la tôle, ceci ayant pour but d'une part de tolérer les variations d'épaisseur pouvant exister pour de telles tôles, et d'autre part de faciliter l'écoulement de la matière dans les zones de rétreint de la pièce c'est à dire là ou la tôle va avoir tendance à s'épaissir au cours de la mise en forme. On évite ainsi les risques de pincements entre les outils qui peuvent entraîner des déchirures. A ce niveau d'épaisseur, l'acier possède une capacité de déformation suffisante pour compenser les différences de jeux qui apparaissent au cours de l'emboutissage, et éviter la formation de plis et/ou de déchirures.

En revanche, lorsque l'épaisseur de la tôle est comprise entre 0,50 et 0,65 mm, l'acier devient sensible aux différences de jeu entre outils, et n'est plus capable de compenser ces différences de jeux. Il se produit par conséquent des plis et des déchirures. Si, lors de l'emboutissage de telles tôles, on conserve l'habitude de régler les outils avec un jeu positif, on parvient à éviter les déchirures. Cependant, la formation des plis est inévitable, et cela est inacceptable surtout pour des pièces de peau.

L'emboutissage d'une tôle présentant une épaisseur inférieure à 0,50 mm en vue de former une pièce de forme complexe ne présentant pas de plis est même impossible, tant il devient délicat de trouver un point de fonctionnement des outils d'emboutissage sans risque de déchirure.

Ainsi, pour réduire le poids des véhicules, les constructeurs se sont tournés vers des matériaux à faible densité comme l'aluminium ou les polymères thermoplastiques pour réaliser ce type de pièces. Dans le cas des polymères thermoplastiques, leur utilisation permet un allègement des pièces de l'ordre de 50% par rapport au même type de pièces en acier, ainsi qu'une grande liberté de forme. En outre, les pièces en polymère thermoplastique présentent une excellente tolérance aux petits chocs.

Cependant, les polymères thermoplastiques présentent des inconvénients tels que :

- des problèmes de conductivité électrique qui rendent leur utilisation incompatible avec les procédés conventionnels de mise en peinture, comme la cataphorèse,
- des difficultés pour obtenir une pièce dont la teinte est la même que celle des pièces environnantes qui sont généralement en acier, et
- des contraintes d'assemblage liées à la dilatation différentielle de la pièce en polymère thermoplastique vis à vis des pièces environnantes lors des cycles de chauffage de la mise en peinture, et pendant la durée de vie du véhicule.

On connaît également des tôles sandwich composées de deux parements extérieurs en tôle d'acier et d'une âme en polymère reliant les deux parements, qui permettent d'atteindre un allègement de l'ordre de 20 à 30% par rapport à une tôle d'acier présentant les mêmes caractéristiques mécaniques. Cependant, d'une part le gain en poids est jugé insuffisant par les constructeurs automobiles, d'autre part la fabrication de ce type de tôles est délicate. En effet, il est difficile de faire adhérer la couche de polymère entre les deux parements de manière homogène, et la tôle sandwich risque de se délaminer lors de sa mise en forme.

Dans les domaines de l'électroménager et de l'industrie générale, les constructeurs sont également soumis à des contraintes d'allègement pour augmenter la productivité. On rencontre donc le même problème que celui rencontré dans le domaine automobile lors de la mise en forme par emboutissage de tôles ou de flans de tôles de fines épaisseurs pour obtenir des pièces présentant un bon aspect.

Dans le domaine de l'emballage, on connaît ainsi EP 648 600 qui divulgue un procédé de fabrication d'une pièce composite consistant à mettre en forme une tôle d'acier d'épaisseur comprise entre 0,10 et 0,30 mm, revêtue par un film de polymère d'épaisseur comprise entre 0,002 et 0,1 mm.

Dans le domaine de l'automobile, on connaît EP 1 342 650 qui divulgue un procédé de fabrication d'une pièce de peau extérieure par emboutissage profond d'une tôle métallique revêtue par coil-coating.

Le but de la présente invention est donc d'éviter la formation de plis et/ou de déchirures sur des pièces en acier obtenues par mise en forme de tôles ou de flans de tôle en acier ayant une épaisseur inférieure à 0,65 mm.

A cet effet, l'invention a pour premier objet un procédé de fabrication d'une pièce composite stratifiée comprenant les étapes consistant à :

- revêtir au moins une face d'une tôle d'acier dont l'épaisseur $E_a$ est inférieure à 0,65 mm, par un ou plusieurs films adhérents de polymère dont l'épaisseur totale $E_p$ est supérieure ou égale à 0,1 mm pour former une tôle d'acier composite stratifiée présentant une épaisseur $E = E_a + E_p$,
- éventuellement, découper ladite tôle pour former un flan, puis
- mettre en forme par emboutissage la tôle ou le flan de tôle composite stratifiée pour obtenir ladite pièce composite, l'emboutissage étant réalisé dans un outil d'emboutissage comprenant un poinçon, une matrice et un serre-flan, en réglant la valeur du passage matière Pm entre le poinçon et la matrice de telle sorte que :

$$E - 0{,}80 \times E_p \le Pm \le E.$$

Le procédé selon l'invention peut également présenter les caractéristiques suivante

- l'emboutissage de la tôle ou du flan de tôle composite stratifiée est réalisé en appliquant le poinçon soit directement sur la face revêtue du film adhérent de polymère de la tôle ou du flan de tôle, soit directement sur la face non revêtue du film adhérent de polymère de la tôle ou du flan de tôle,
- l'épaisseur de la tôle d'acier $E_a$ est inférieure à 0,5 mm,
- l'épaisseur du film adhérent de polymère $E_p$ est supérieure à 0,2 mm,
- l'épaisseur totale de la tôle d'acier composite stratifiée E est comprise entre 0,3 et 1,2 mm,
- le film de polymère est directement extrudé sur la tôle,
- le film de polymère est préalablement formé, avant d'être appliqué sur la tôle d'acier par lamination à chaud ou par collage au moyen d'un adhésif,
- le polymère du film adhérent est un polymère thermoplastique choisi parmi les polyoléfines, les polyesters, les polyamides et leurs mélanges.
- En vue d'améliorer l'adhésion du film de polymère sur la tôle d'acier : le polymère est fonctionnalisé par greffage avec un acide carboxylique ou l'un de ses dérivés, et/ou le film de polymère subit, avant son application sur la tôle d'acier, un traitement corona ou un traitement de flammage, et/ou la tôle d'acier est soumise à un traitement de surface préalable en vue d'améliorer l'adhésion du film de polymère sur la tôle.

La tôle d'acier utilisée pour fabriquer la pièce composite stratifiée selon l'invention a une épaisseur $E_a$ qui est supérieure à 0,1 et inférieure à 0,65 mm, de préférence inférieure à 0,5 mm et avantageusement inférieure à 0,4 mm.

En effet, en dessous de 0,1 mm, la rigidité de la pièce composite stratifiée sera insuffisante, et à partir de 0,65 mm le gain en poids de la pièce sera insuffisant.

Généralement, les tôles utilisées pour fabriquer les pièces de carrosserie extérieure pour automobile, y compris les doublures des ouvrants ou les pièces pour électroménager, ont une largeur supérieure à 600 mm, et les flans de tôle ont au moins une de leur dimension qui est supérieure à 600 mm.

La nuance d'acier utilisée dépend principalement des applications envisagées. Par exemple, dans le cas où la pièce composite stratifiée est utilisée pour la fabrication de véhicules automobiles, les nuances d'acier typiquement utilisées sont les nuances Dual Phase, les nuances ES (EN DC 01 à DC06), les nuances HLE (EN H 240 LA à H 40 LA) ou encore les nuances IF P220 ou P235.

La tôle d'acier peut être pré-revêtue ou non. De préféren ce, de manière à améliorer ses propriétés, elle sera pré-revêtue sur au moins une de ses faces par un revêtement métallique, par exemple à base d e zinc pur ou d'alliage de zinc ou par un revêtement organique mince (de l'ordre du μm) de type film sec de lubrification, primaire anti-corrosion, laque de finition ou primaire d'adhésion. Elle peut également avoir subi un traitement de chromatation ou de phosphatation, ou encore avoir été revêtue par un film d'huile.

Le film adhérent de polymère a une épaisseur $E_p$ supérieure ou égale à 0,1 mm, et de préférence supérieure à 0,2 mm.

En dessous de 0,1 mm, on risque d'endommager rapidement la pièce lors de sa fabrication d'abord par arrachement du pré-revêtement, puis par rupture de la pièce. Au-dessus de 0,2 mm, le gain en poids de la pièce commence à être appréciable, car plus l'épaisseur du polymère est importante, plus l'épaisseur de la tôle peut être réduite.

Le polymère est choisi en fonction de la destination finale de la pièce, cependant, celui-ci doit dans tous les cas présenter les caractéristiques suivantes :

- un haut niveau d'adhésion sur la tôle d'acier pour d'une part éviter les phénomènes du type délamination pendant la mise en forme du flan de tôle composite stratifiée, et d'autre part garantir une bonne tenue à la corrosion, et
- un niveau de ductilité suffisant pour ne pas pénaliser les caractéristiques de formabilité de la tôle composite stratifiée.

Enfin, selon la destination de la pièce composite stratifiée, le polymère présentera des caractéristiques additionnelles.

Ainsi, dans les domaines de l'automobile et de l'électroménager, le polymère peut également présenter des propriétés d'amortissement vibro-acoustique.

Dans le domaine de l'automobile, il est en outre préférable que le polymère présente une bonne tenue mécanique en température pour garantir l'aspect de surface et la précision géométrique de la pièce, et ce même après avoir subi un traitement thermique sévère comme par exemple lors de sa mise en peinture par cataphorèse. En effet, la cataphorèse implique l'exposition de la pièce à des températures comprises entre 140 et 200°C pendant 15 à 30 minutes de manière à cuire la couche de peinture.

Le polymère est un polymère thermoplastique choisi parmi les polyoléfines comme par exemple le polyéthylène et le polypropylène, les polyesters comme par exemples le polyéthylène téréphtalate, les polyamides, et leurs mélanges.

Pour améliorer l'adhésion du film de polymère sur la tôle d'acier, le polymère est de préférence fonctionnalisé par greffage avec un acide carboxylique ou l'un de ses dérivés. Il peut également comprendre un copolymère de styrène et d'acide carboxylique ou l'un de ses dérivés, ou encore une très faible quantité de résine époxy. Le film de polymère peut également subir, avant application sur la tôle, un traitement corona ou un traitement de flammage. La tôle peut en outre être soumis un traitement de surface préalable tel qu'une chromatation, une phosphatation ou tout autre traitement de surface dit sans chrome VI.

Le polymère peut également contenir des composés bien connus de l'homme du métier pour améliorer encore les propriétés du polymère, par exemple, des additifs comme des agents anti-statiques, des pigments, des colorants et des agents anti-oxydants afin d'éviter les phénomènes de thermo-oxydation qui peuvent avoir lieu lors des cycles de cuisson des peintures.

En outre, les caractéristiques de mise en oeuvre du polymère peuvent être améliorées par incorporation de faibles quantités de lubrifiants ou d'agents de glissement.

Le film peut comprendre une ou plusieurs couches de polymère dont l'épaisseur totale $E_p$ est supérieure ou égale à 0,1 mm, comme par exemple un film co-extrudé bicouche comprenant une première couche adhésive de 50 $\mu$m d'épaisseur constituée de polypropylène greffé anhydride maléique, et une seconde couche de 350 $\mu$m d'épaisseur de polypropylène.

Pour fabriquer la tôle d'acier stratifiée composite, on applique un ou plusieurs films de polymère sur toute la surface, ou sur une partie seulement d'au moins une face de la tôle d'acier par laminage à chaud ou par collage au moyen d'un adhésif.

De préférence, la tôle d'acier est préchauffée de manière à assurer une meilleure adhésion du film de polymère sur la tôle d'acier.

Le film de polymère est préalablement formé, par exemple par extrusion, puis appliqué sur la tôle d'acier, ou alors directement extrudé sur la tôle.

Généralement, l'épaisseur totale de la tôle d'acier composite stratifiée E est comprise entre 0,3 et 1,2 mm.

En effet, il ne sera pas possible de fabriquer, à partir d'une tôle composite stratifiée d'épaisseur E inférieure à 0,3 mm, des pièces présentant une rigidité suffisante pour une application industrielle. En revanche, au-delà de 1,2 mm, le gain en poids de la pièce sera insuffisant.

Après avoir fabriqué la tôle composite stratifiée, il est encore possible de la renforcer localement en appliquant sur le film adhérent de polymère des flans de tôle d'acier, de manière à former des tôles de type patchwork.

Lorsqu'on a fabriqué la tôle d'acier composite stratifiée, soit on la met directement en forme dans des outils dits "outils à suivre", c'est à dire que la tôle initialement sous forme de bobine, est débobinée puis directement engagée entre les outils qui vont réaliser tout ou partie des découpes de la pièce en même temps que certaines étapes de la mise en forme, soit on la découpe pour former des flans qui seront aptes à une mise en forme ultérieure.

La mise en forme de la tôle ou du flan de tôle composite stratifiée est réalisée par emboutissage dans un outil d'emboutissage comprenant classiquement un poinçon, une matrice et un serre-flan.

Après avoir fixé la tôle ou le flan dans le serre-ftan, on règle le passage matière Pm entre le poinçon et la matrice de telle sorte que le passage matière Pm soit compris, bornes comprises, entre l'épaisseur de la tôle ou du flan de tôle composite stratifiée E ôtée de 80 % de l'épaisseur totale du ou des films de polymère adhérent $E_p$, et l'épaisseur de la tôle ou du flan de tôle composite stratifiée E, c'est à dire : E - 0,80 x $E_p$ ≤ Pm ≤ E.

Ce réglage permet d'obtenir une pièce ne présentant ni plis, ni déchirures. Ceci est du à l'aptitude du polymère à se compresser et à se déformer qui est supérieure à celle de l'acier.

Après avoir réglé le passage matière Pm entre le poinçon et la matrice, on emboutit la tôle ou le flan en appliquant le poinçon soit sur la face de la tôle ou du flan revêtue du film de polymère adhérent, soit sur la face non revêtue de ce film.

Comme on le verra dans les exemples ultérieurs, le film de polymère appliqué sur la tôle ou le flan de tôle permet de réduire l'épaisseur de la tôle qu'on cherche à mettre en forme, en raison de l'aptitude du polymère à se compresser et à se déformer. Ainsi, le polymère va permettre de maintenir une pression et un contact constants et uniformes entre le poinçon, la tôle ou le flan, et la matrice, en s'écoulant de façon sacrificielle. Les zones de rétreint dans la tôle ou le flan de tôle composite stratifiée, qui dans le cas particulier d'une tôle d'acier monolithique sont d'autant plus critiques que l'épaisseur de la tôle est faible, vont être d'autant plus compensées et stabilisées que l'épaisseur du film de polymère est importante pour une épaisseur de tôle donnée. Par conséquent, la formation de plis dans la pièce, l'altération du pré-revêtement, et/ou la casse de la pièce seront réduites de manière conséquente, voir complètement éliminées.

Les inventeurs ont ainsi mis en évidence que si on règle le passage matière Pm à une valeur supérieure à l'épaisseur de la tôle ou du flan de tôle composite stratifiée E, des plis commencent à se former dans la pièce au fur et à mesure que le poinçon déforme la tôle ou le flan de tôle revêtue par le ou les films de polymère adhérent, plis qui seront d'autant plus importants que Pm est important.

En revanche, si l'on règle le passage matière Pm à une valeur inférieure à E - 0,80 x $E_p$, la pièce risque de se déchirer, en raison des frottements excessifs entre la matrice, le poinçon et la tôle ou le flan de tôle composite stratifiée. Dans le cas où la tôle ou le flan de tôle composite stratifiée est pré-revêtu(e), par exemple par un pré-revêtement de zinc, ce pré-revêtement va se détériorer, puis lorsque les contraintes augmentent, la tôle ou le flan de tôle d'acier va se déchirer en raison de la compression excessive du ou des films de polymère adhérents.

Les pièces obtenues sont utilisables dans différents domaines où un gain de poids peut être recherché, comme par exemple dans l'automobile pour la fabrication d'ailes, dans l'électroménager pour la fabrication de carcasses de machine à laver, et dans l'industrie générale.

Selon l'application à laquelle on destine la pièce composite stratifiée, celle-ci peut être revêtue d'un film adhérent de polymère sur une face ou sur les deux faces de la tôle d'acier.

Par exemple, une pièce destinée à la fabrication d'électroménager peut avantageusement être revêtue sur ses deux faces par un film adhérent de polymère, la nature du polymère pouvant être identique ou différente, de manière à conférer à la face visible de la pièce un aspect de surface satisfaisant.

Une tôle d'acier revêtue par un film de polymère adhérent permet ainsi de fabriquer des pièces présentant un gain de l'ordre de 30 à 50 % en poids par rapport à une pièce en acier monolithique, et ceci avec une perte limitée de la rigidité de la pièce formée.

Une telle tôle composite stratifiée présente en outre l'avantage de ne pas se marquer pendant les étapes de manutention de ladite tôle, en raison de son caractère élastique.

La pièce composite stratifiée obtenue selon l'invention présente en outre, à épaisseur de pièce égale, une résistance aux petits chocs supérieure à celle d'une pièce en acier monolithique ou même en polymère monolithique. Cette caractéristique est particulièrement recherchée par les constructeurs automobiles, pour les pièces de peau comme les ailes ou les peaux d'ouvrant par exemple, qui subissent régulièrement des chocs de faible intensité.

On entend par pièce résistant aux petits chocs, une pièce qui se déforme sous l'action d'un choc, et retrouve sa forme initiale sans aucun marquage résiduel. Pour une géométrie de pièce donnée, chaque matériau, en fonction de son comportement mécanique et de son épaisseur, possède une énergie de cloquage au-delà de laquelle, à la suite d'un choc, la pièce est marquée de façon importante, sans possibilité de retrouver sa forme initiale.

Considérant que le marquage d'une pièce n'est visible qu'à partir d'une déformation résiduelle de 0,25 mm, les inventeurs ont ainsi mis en évidence que le marquage irréversible d'une pièce monolithique en acier de nuance DP 500 et d'épaisseur 0,75 mm se produit avec un choc ayant une énergie de 2,28 J, alors que le marquage irréversible d'une pièce en acier de nuance DP 500, d'épaisseur 0,5 mm revêtu par un film de polypropylène d'épaisseur 0,25 mm ne se produit qu'à partir d'un choc ayant une énergie de 4,73 J. Ces valeurs sont à considérer sans que l'acier DP 500 ait subi de bake-hardening (durcissement sous l'effet du recuit). Si cela avait été le cas, le marquage de la pièce n'aurait débuté qu'à partir de choc présentant une énergie supérieure à ce qui a été précédemment mentionné.

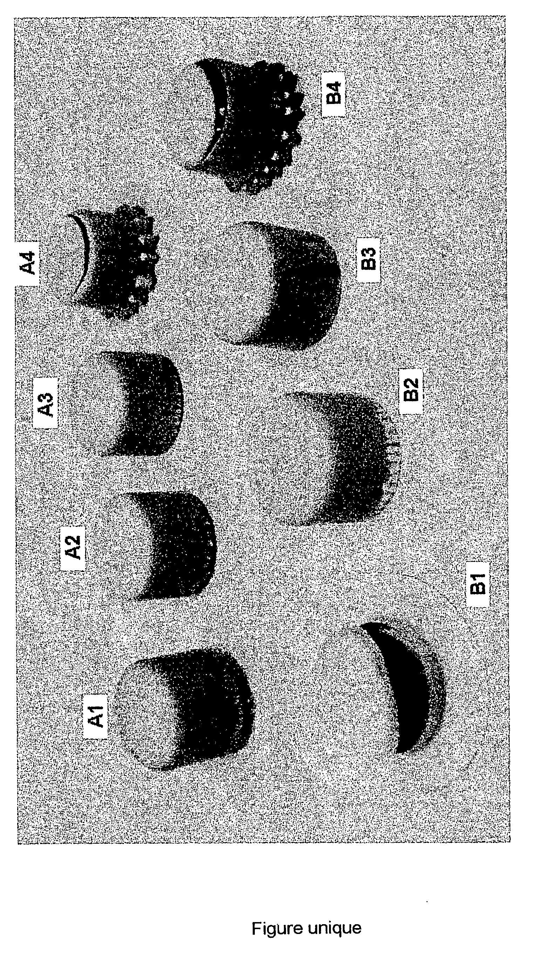

L'invention va à présent être illustrée par des exemples donnés à titre indicatif, et non limitatif, et en référence à la figure unique annexée.

## 1- Caractérisation en emboutissage

La figure unique illustre les résultats des tests d'emboutissage effectués sur différents flans de tôle d'acier revêtus par un film de polymère adhérent selon l'invention (godets A1 à A4) ou non revêtus (godets B1 à B4).

A cet effet, on a fabriqué une tôle d'acier, de nuance DP500, d'épaisseur 0,5 mm, pré-revêtue sur chacune de ses faces par un revêtement de zinc réalisé par électrozingage.

Puis, on a appliqué par colaminage, un film de polymère co-extrudé à base de polypropylène greffé anhydride maléique et de polypropylène, d'épaisseur 0,25 mm, sur une des faces d'une partie de la tôle.

On a ensuite découpé des flans de diamètre 64 mm dans la tôle revêtue par le film de polymère selon l'invention et dans la tôle non revêtue. On a appliqué sur les deux faces de chacun des flans un film téflon d'épaisseur 0,025 mm, pour éliminer tous risques de frottements sur les outils.

Les deux séries de flans ont ensuite subi un test de déformation contrôlé au moyen d'une presse d'emboutissage comprenant un poinçon, une matrice et un serre-flan, pour former des godets swift de diamètre 33 mm, en appliquant une force de serrage du serre-flan de 10 kN.

Pour montrer que l'emboutissage de tôles d'acier de 0,5 mm d'épaisseur est facilité lorsqu'elles sont revêtues d'un film de polymère, les inventeurs ont fait varier le passage matière entre le poinçon et la matrice, c'est à dire le jeu existant entre les outils. En effet, les presses d'emboutissage conventionnelles ne sont pas parfaitement adaptées pour emboutir des flans de tôle de grandes dimensions, c'est à dire des flans de tôle dont au moins une dimension est supérieure à 600 mm, stratifiées ou non, présentant une épaisseur inférieure à 0,65 mm.

Pour comprendre le principe de l'essai d'emboutissage réalisé pour illustrer l'invention, nous allons considérer une tôle d'acier monolithique pré-revêtue de zinc d'une épaisseur E. Pour cette tôle, nous définissons différentes zones entre la matrice et le poinçon, en fonction du rétreint de l'acier :

-   si la distance entre la matrice et le poinçon est égale à E, nous sommes dans le cas idéal où le jeu entre la tôle d'acier et les outils d'emboutissage est inexistant. Cela permet d'obtenir une pièce parfaite sans plis, ni déchirure,
-   si la distance entre la matrice et le poinçon est supérieure à E, des plis commencent à se former dans la tôle d'acier au fur et à mesure que le poinçon déforme la tôle, plis qui seront d'autant plus importants que le jeu est important, et
-   si la distance entre la matrice et le poinçon est inférieure à E, les frottements entre les outils et la tôle d'acier sont d'autant plus importants que la distance est faible. Dans un premier temps, le pré-revêtement est détérioré, puis lorsque les contraintes augmentent, la tôle d'acier se déchire.

Les résultats de l'emboutissage des flans en fonction de la distance entre la matrice et le poinçon sont regroupés dans le tableau suivant, les godets obtenus étant côtés de la manière suivante :

-   cotation 1 : godet bien formé, sans pli, ni arrachement du pré-revêtement de zinc
-   cotation 2 : godet bien formé, mais arrachement du pré-revêtement de zinc
-   cotation 3 : formation de plis et début de rupture du godet
-   cotation 4 : rupture du godet et/ou formation importante de plis

Pour chacun des godets formés, on relève la cotation en fonction de la distance entre les outils d'emboutissage (on parle de « passage matière »), qu'on exprime en fonction de l'épaisseur du flan de tôle, stratifié ou non, plus le jeu entre le flan et les outils d'emboutissage.

Les flans A désignent les flans, d'épaisseur 0,75 mm, découpés dans la tôle d'acier revêtue du film de polymère selon l'invention. Les flans B, d'épaisseur 0,5 mm, servant de comparaison, désignent les flans découpés dans la même tôle d'acier non revêtue de polymère.

Pour bien comprendre comment doit se lire le tableau 1 ci-dessous, nous allons considérer le flan A pour lequel l'épaisseur est 0,75 mm, avec un jeu entre le flan et les outils d'emboutissage de 0,1 mm, ce qui correspond à la formation du godet A4. La valeur, mise entre parenthèse dans le tableau, de l'épaisseur du flan + 0,1 mm est donc de 0,85 mm, et la cotation relevée est de 3.

Tableau 1 : résultats des essais

| Produit : | Cotation du godet formé | | | |
| --- | --- | --- | --- | --- |
| | épaisseur du flan - 0,2 mm (valeur) | épaisseur du flan - 0,1 mm (valeur) | épaisseur du flan (valeur) | épaisseur du flan + 0,1 mm (valeur) |
| Flans A selon l'invention | godet A1 1 (0,55 mm) | godet A2 1 (0,65 mm) | godet A3 1 (0,75 mm) | godet A4 3 (0,85 mm) |
| Flans B comparatifs | godet B1 4 (0,3 mm) | godet B2 2 (0,4 mm) | godet B3 1 (0,5 mm) | godet B4 4 (0,6 mm) |

Les inventeurs ont montré que la présence d'un film de polymère adhérent sur une tôle d'acier permet d'étendre la plage de fonctionnement d'un tel outil, en procurant en outre un mécanisme de compensation des jeux négatifs, de part l'aptitude à la compression du polymère qui est supérieure à celle de l'acier, mais également de part la formabilité élevée du polymère. Le polymère en s'écoulant de façon sacrificielle va permettre dans un premier temps, de préserver le pré-revêtement de zinc, et de retarder considérablement l'apparition d'une rupture dans la pièce.

## 2- <u>Caractérisation en petits chocs</u>

La caractérisation en petits chocs a été effectuée sur des pièces ayant la forme générale d'une coupelle présentant une profondeur de 30 mm. Ces pièces sont réalisées par emboutissage peu profond, à partir des tôles en acier monolithiques ou composites stratifiées suivantes :

- **-** pièce A : tôle en acier monolithique de nuance DP 500, d'épaisseur 0,5 mm, n'ayant pas subi de bake-hardening,
- **-** pièce B : tôle en acier de nuance DP 500, d'épaisseur 0,75 mm, n'ayant pas subi de bake-hardening,
- **-** pièce C : tôle en acier de nuance DP 500, d'épaisseur 0,5 mm, n'ayant pas subi de bake-hardening, revêtue sur une seule de ses faces par un film de polypropylène d'épaisseur 0,25 mm,
- **-** pièce D : tôle en acier de nuance DP 500, d'épaisseur 0,5 mm, n'ayant pas subi de bake-hardening, revêtue sur une seule de ses faces par un film de polypropylène d'épaisseur 0,5 mm.

Pour évaluer la déformation résiduelle de la pièce après un petit choc, on laisse chuter sur celle-ci un mobile présentant une masse variable, avec une hauteur de chute et une vitesse également variables, de manière à faire varier l'énergie d'impact du mobile sur la pièce.
On laisse ainsi chuter sur les pièces un mobile ayant la forme générale d'une demi-sphère, en aluminium, de diamètre 85 mm, revêtue par une couche de caoutchouc de 6,5 mm d'épaisseur
Après l'impact du mobile sur la pièce, on observe et on mesure le marquage résiduel de la pièce, c'est à dire la profondeur de la marque laissée par le mobile lors de sa chute sur la pièce. Les résultats des essais sont regroupés dans le tableau 2.

Tableau 2 - résultats des essais petits chocs

| | Marquage résiduel de la pièce (mm) | | | |
| --- | --- | --- | --- | --- |
| Energie d'impact (J) | Pièce A | Pièce B | Pièce C * | Pièce D * |
| 1,49 | n.m. | 0,2 | n.m. | n.m. |
| 2,28 | 0,12 | 0,3 | n.m. | n.m. |
| 2,77 | 0,16 | n.m. | n.m. | n.m. |
| 3,26 | 0,17 | 0,4 | 0,18 | n.m. |
| 3,75 | 0,20 | n.m. | 0,20 | n.m. |
| 4,05 | 2,15 | 0,5 | n.m. | n.m. |
| 4,24 | 6,43 | n.m. | 0,20 | 0,13 |
| 4,54 | n.m. | n.m. | 0,22 | n.m. |

(suite)

| | Marquage résiduel de la pièce (mm) | | | |
|---|---|---|---|---|
| Energie d'impact (J) | Pièce A | Pièce B | Pièce C * | Pièce D * |
| 4,73 | 9,2 | n.m. | 7 | n.m. |
| 5,03 | n.m. | n.m. | n.m. | 0,13 |
| 5,22 | n.m. | n.m. | n.m. | 7,2 |
| * invention<br>n.m. : non mesuré | | | | |

Le marquage sur la pièce est visible lorsque la profondeur de l'impact est supérieure à 0,25 mm. Bien que la pièce B soit plus rigide que la pièce D, il suffit d'un choc de plus faible énergie pour marquer la pièce B que pour marquer la pièce D. Ainsi, les inventeurs ont ainsi mis en évidence que l'ajout d'un film de polymère sur la tôle en acier permet d'améliorer sensiblement la résistance aux petits chocs des pièces selon l'invention.

**Revendications**

1. Procédé de fabrication d'une pièce composite stratifiée comprenant les étapes consistant à :

    - revêtir au moins une face d'une tôle d'acier dont l'épaisseur $E_a$ est inférieure à 0,65 mm par un ou plusieurs films adhérents de polymère dont l'épaisseur totale $E_p$ est supérieure ou égale à 0,1 mm pour former une tôle d'acier composite stratifiée présentant une épaisseur E, selon laquelle $E = E_a + E_p$,
    - éventuellement, découper ladite tôle pour former un flan, puis
    - à mettre en forme par emboutissage la tôle ou le flan de tôle composite stratifiée pour obtenir ladite pièce composite, l'emboutissage étant réalisé dans un outil d'emboutissage comprenant un poinçon, une matrice et un serre-flan, en réglant la valeur du passage matière Pm entre le poinçon et la matrice, de telle sorte que :

$$E - 0,80 \text{ x } E_p \leq Pm \leq E.$$

2. Procédé selon la revendication 1, **caractérisé en ce qu'**on emboutit la tôle ou le flan de tôle composite stratifiée, en appliquant le poinçon directement sur la face revêtue du film adhérent de polymère de la tôle ou du flan de tôle.

3. Procédé selon la revendication 1, **caractérisé en ce qu'**on emboutit la tôle ou le flan de tôle composite stratifiée, en appliquant le poinçon directement sur la face non revêtue du film adhérent de polymère de la tôle ou du flan de tôle.

4. Procédé selon l'une quelconque des revendications 1 à 3, **caractérisé en ce que** l'épaisseur de la tôle d'acier $E_a$ est inférieure à 0,5 mm.

5. Procédé selon l'une quelconque des revendications 1 à 4, **caractérisé en ce que** l'épaisseur du film adhérent de polymère Ep est supérieure à 0,2 mm.

6. Procédé selon l'une quelconque des revendications 1 à 5, **caractérisé en ce que** l'épaisseur totale de la tôle d'acier composite stratifiée E est comprise entre 0,3 et 1,2 mm.

7. Procédé selon l'une quelconque des revendications 1 à 6, **caractérisé en ce que** le film de polymère est directement extrudé sur la tôle.

8. Procédé selon l'une quelconque des revendications 1 à 6, **caractérisé en ce que** le film de polymère est préalablement formé, avant d'être appliqué sur la tôle d'acier par lamination à chaud ou par collage au moyen d'un adhésif.

9. Procédé selon l'une quelconque des revendications 1 à 8, **caractérisé en ce que** le polymère du film adhérent est un polymère thermoplastique.

8

**10.** Procédé selon la revendication 9, **caractérisé en ce que** le polymère thermoplastique est choisi parmi les polyoléfines, les polyesters, les polyamides et leurs mélanges.

**11.** Procédé selon l'une des revendications 9 ou 10, **caractérisé en ce que** le polymère est fonctionnalisé par greffage avec un acide carboxylique ou l'un de ses dérivés.

**12.** Procédé selon l'une quelconque des revendications 1 à 11, **caractérisé en ce que** le film de polymère subit, avant son application sur la tôle d'acier, un traitement corona ou un traitement de flammage.

**13.** Procédé selon l'une quelconque des revendications 1 à 12, **caractérisé en ce que** la tôle d'acier est soumise à un traitement de surface préalable en vue d'améliorer l'adhésion du film de polymère sur la tôle.

**Claims**

**1.** Method for fabricating a composite laminate part comprising the steps consisting in:

- coating at least one side of a steel sheet, the thickness $E_a$ of which is less than 0.65 mm, with one or more adhesive polymer films, the total thickness $E_p$ of which is equal to or greater than 0.1 mm, in order to form a composite laminate steel sheet having a thickness E, according to which $E = E_a + E_p$,
- optionally, cutting said sheet to form a blank, and then
- forming the composite laminate sheet or sheet blank by drawing in order to obtain said composite part, the drawing being carried out in a drawing tool comprising a punch, a die and a blank holder, by adjusting the clearance Pm between the punch and the die, so that :

$$E - 0.80 \times E_p \leq Pm \leq E.$$

**2.** Method according to Claim 1, **characterized in that** the composite laminate sheet or sheet blank is drawn by applying the punch directly to the side of the sheet or the sheet blank that is coated with the adhesive polymer film.

**3.** Method according to Claim 1, **characterized in that** the composite laminate sheet or sheet blank is drawn by applying the punch directly to the side of the sheet or the sheet blank that is not coated with the adhesive polymer film.

**4.** Method according to any one of Claims 1 to 3, **characterized in that** the thickness $E_a$ of the steel sheet is less than 0.5 mm.

**5.** Method according to any one of Claims 1 to 4, **characterized in that** the thickness $E_p$ of the adhesive polymer film is greater than 0.2 mm.

**6.** Method according to any one of Claims 1 to 5, **characterized in that** the total thickness E of the composite laminate steel sheet is between 0.3 and 1.2 mm.

**7.** Method according to any one of Claims 1 to 6, **characterized in that** the polymer film is directly extruded onto the sheet.

**8.** Method according to any one of Claims 1 to 6, **characterized in that** the polymer film is formed beforehand, before being applied to the steel sheet by hot lamination or by bonding using an adhesive.

**9.** Method according to any one of Claims 1 to 8, **characterized in that** the polymer of the adhesive film is a thermoplastic polymer.

**10.** Method according to Claim 9, **characterized in that** the thermoplastic polymer is selected from polyolefins, polyesters, polyamides and blends thereof.

**11.** Method according to either of Claims 9 and 10, **characterized in that** the polymer is functionalized by grafting with a carboxylic acid or a derivative thereof.

**12.** Method according to any one of Claims 1 to 11, **characterized in that** before the polymer film is applied to the steel sheet, it undergoes a corona discharge or flame treatment.

**13.** Method according to any one of Claims 1 to 12, **characterized in that** the steel sheet is subjected to a prior surface treatment to improve the adhesion of the polymer film to the sheet.

**Patentansprüche**

**1.** Verfahren zur Herstellung eines laminierten Verbundteils, wobei das Verfahren die Schritte umfasst, die in Folgendem bestehen:

- Beschichten mindestens einer Fläche eines Stahlblechs, dessen Dicke $E_a$ weniger als 0,65 mm beträgt, mit einer oder mehreren anhaftenden Polymerfolien, deren Gesamtdicke $E_p$ mehr als oder gleich 0,1 mm beträgt, um ein laminiertes Verbundstahlblech zu bilden, das eine Dicke E aufweist, wobei $E = E_a + E_p$,
- gegebenenfalls Stanzen des Blechs, um einen Rohling zu bilden, dann
- Formen des laminierten Verbundblechs oder des laminierten Verbundblechrohlings durch Tiefziehen, um das Verbundteil zu erhalten, wobei das Tiefziehen in einem Tiefziehwerkzeug, das eine Patrize, eine Matrize und einen Niederhalter umfasst, durch Regelung des Werts des Materialdurchsatzes Pm zwischen der Patrize und der Matrize durchgeführt wird, so dass:

$$E - 0,80 \times E_p \leq Pm \leq E.$$

**2.** Verfahren nach Anspruch 1, **dadurch gekennzeichnet, dass** das laminierte Verbundblech oder der laminierte Verbundblechrohling tiefgezogen wird, indem die Patrize direkt auf die mit anhaftender Polymerfolie beschichtete Fläche des Blechs oder des Blechrohlings angewendet wird.

**3.** Verfahren nach Anspruch 1, **dadurch gekennzeichnet, dass** das laminierte Verbundblech oder der laminierte Verbundblechrohling tiefgezogen wird, indem die Patrize direkt auf die nicht mit anhaftender Polymerfolie beschichtete Fläche des Blechs oder des Blechrohlings angewendet wird.

**4.** Verfahren nach einem der Ansprüche 1 bis 3, **dadurch gekennzeichnet, dass** die Dicke des Stahlblechs $E_a$ weniger als 0,5 mm beträgt.

**5.** Verfahren nach einem der Ansprüche 1 bis 4, **dadurch gekennzeichnet, dass** die Dicke der anhaftenden Polymerfolie $E_p$ mehr als 0,2 mm beträgt.

**6.** Verfahren nach einem der Ansprüche 1 bis 5, **dadurch gekennzeichnet, dass** die Gesamtdicke des laminierten Verbundstahlblechs E zwischen 0,3 und 1,2 mm beträgt.

**7.** Verfahren nach einem der Ansprüche 1 bis 6, **dadurch gekennzeichnet, dass** die Polymerfolie direkt auf das Blech extrudiert wird.

**8.** Verfahren nach einem der Ansprüche 1 bis 6, **dadurch gekennzeichnet, dass** die Polymerfolie vorab geformt wird, bevor sie durch Heißlaminierung oder durch Kleben mit einem Klebstoff auf das Stahlblech aufgebracht wird.

**9.** Verfahren nach einem der Ansprüche 1 bis 8, **dadurch gekennzeichnet, dass** es sich bei der anhaftenden Polymerfolie um ein thermoplastisches Polymer handelt.

**10.** Verfahren nach Anspruch 9, **dadurch gekennzeichnet, dass** das thermoplastische Polymer aus Polyolefinen, Polyestern, Polyamiden und deren Gemischen ausgewählt ist.

**11.** Verfahren nach einem der Ansprüche 9 oder 10, **dadurch gekennzeichnet, dass** das Polymer durch Pfropfen mit einer Carbonsäure oder einem ihrer Derivate funktionalisiert wird.

**12.** Verfahren nach einem der Ansprüche 1 bis 11, **dadurch gekennzeichnet, dass** die Polymerfolie nach deren Aufbringen auf das Stahlblech einer Koronabehandlung oder einer Beflammungsbehandlung unterzogen wird.

13. Verfahren nach einem der Ansprüche 1 bis 12, **dadurch gekennzeichnet, dass** das Stahlblech einer vorherigen Oberflächenbehandlung unterzogen wird, um die Anhaftung der Polymerfolie an dem Blech zu verbessern.

Figure unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 648600 A

- EP 1342650 A